(19) Europäisches Patentamt
European Patent Office
Office européen des brevets

(11) **EP 2 431 340 A1**

(12) **EUROPEAN PATENT APPLICATION**
published in accordance with Art. 153(4) EPC

(43) Date of publication:
**21.03.2012 Bulletin 2012/12**

(51) Int Cl.:
***C03C 17/36*** (2006.01)     ***C03C 27/12*** (2006.01)
***B60J 1/00*** (2006.01)

(21) Application number: **10774852.7**

(22) Date of filing: **06.05.2010**

(86) International application number:
**PCT/JP2010/057756**

(87) International publication number:
**WO 2010/131595 (18.11.2010 Gazette 2010/46)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **14.05.2009 JP 2009117331**

(71) Applicant: **Nippon Sheet Glass Company Limited
Tokyo 108-6321 (JP)**

(72) Inventors:
• **SHIMOMURA, Takahiro
  Tokyo 108-6321 (JP)**
• **KUBO, Tomoyuki
  Tokyo 108-6321 (JP)**

(74) Representative: **Strobel, Wolfgang et al
Kroher-Strobel
Rechts- und Patentanwälte
Bavariaring 20
80336 München (DE)**

(54) **VEHICLE GLASS AND METHOD FOR MANUFACTURING SAME**

(57)     A vehicle glass (10) comprises an outer glass plate (31) adjacent to the exterior of the vehicle, an inner glass plate (32) adjacent to the interior of the vehicle, and an intermediate film (33) that joins these glass plates. The outer glass plate is a bent glass plate formed by printing a black ceramic layer (14) on a face of a glass plate (13) adjacent to the interior of the vehicle, covering the black ceramic layer with a printed silver layer (12), and bending using a press-bending device. When a reflection color tone is obtained by measuring a portion at which the printed silver layer is printed from a side of the layer on which the glass palate lies, the chromatic coordinate b* in the CIE 1976 color system defined in JIS Z 8729 does not exceed six.

FIG.10

**Description**

TECHNICAL FIELD

The present invention relates to a vehicle glass and a technique for manufacturing the same.

BACKGROUND ART

Tinted vehicle glass in which a black ceramic layer is printed on a front surface of a float glass sheet and a silver layer is overlaid and printed thereupon is well known. The technique disclosed in Patent Literature 1 is an example of a conventional technique relating to tinted vehicle glass.

The tinted vehicle glass described in Patent Literature 1 will now be described with reference to Fig. 11 hereof.

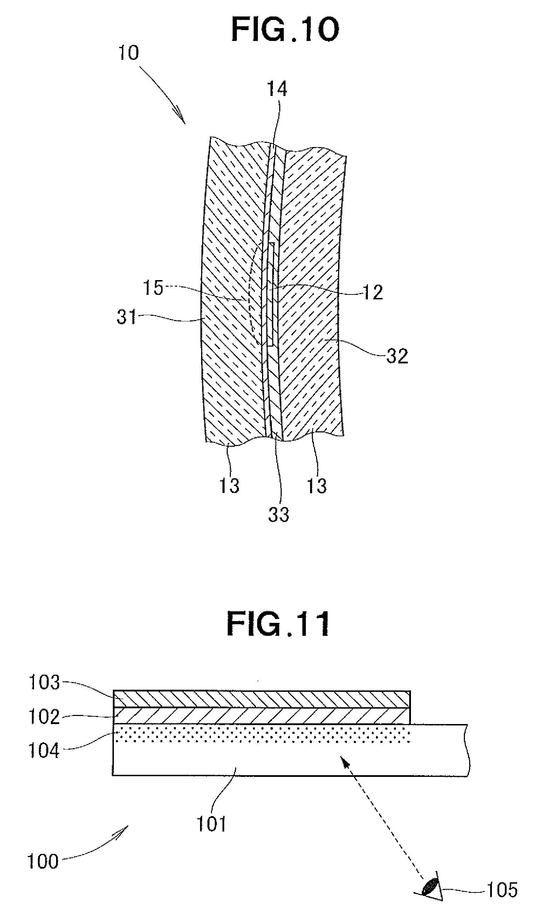

A vehicle glass 100 is formed of a float glass sheet 101, a black ceramic layer 102 printed on the float glass sheet 101, and a silver layer 103 overlaid and printed on the black ceramic layer 102, as shown in Fig. 11. In the vehicle glass 100, silver ions are diffused across the float glass sheet 101 to form a silver colloid diffusion layer 104 on the float glass sheet 101.

From the outside, the silver colloid diffusion layer 104 appears to an eye 105 to be in front of the black ceramic layer 102. The color of the silver colloid diffusion layer 104 does not stand out in the case of a dark color approximating that of the black ceramic layer 102. However, the color of the silver colloid diffusion layer 104 stands out and presents problems in terms of appearance in the case of a yellow color or another bright, painted color.

As a countermeasure, the color problem was resolved by making the average grain size (diameter) of the silver colloid to be 10 μm or less in the technique in Patent Literature 1.

However, reducing the grain size of the silver colloid brings about new problems, such as an increase in the cost of providing the necessary materials and the need to employ manufacturing techniques that involve obtaining smaller grain sizes.

Prior Art Literature:

Patent Literature:

Patent Literature 1:     Japanese Patent Application Laid-Open Publication No. 2001-199746

SUMMARY OF INVENTION

Technical Problem:

With the foregoing in view, it is an object of the present invention to provide a technique for resolving the color problem using a simpler method than that involving a reduction in the grain size of the silver colloid.

Solution to Problem:

According to an aspect of the present invention, there is provided a vehicle glass obtained by printing a black ceramic layer on a glass sheet, covering the black ceramic layer with a printed silver layer, and bending using a press-bending device; wherein the chromatic coordinate b* in the CIE 1976 color system defined in JIS Z 8729 does not exceed 6 when a reflection color tone is obtained by measuring, from a side on which the glass sheet lies, a portion covered with the printed silver layer.

The reflection color tone is preferably such that the chromatic coordinate b* in the CIE 1976 color system defined in JIS Z 8729 does not exceed 3.

According to another aspect of the present invention, there is provided a vehicle glass comprising an outer glass sheet adjacent to the exterior of the vehicle and formed by printing a black ceramic layer on a face of a glass sheet adjacent to the interior of the vehicle, covering the black ceramic layer with a printed silver layer, and bending using a press-bending device, wherein the chromatic coordinate b* in the CIE 1976 color system defined in JIS Z 8729 does not exceed 6 when a reflection color tone is obtained by measuring, from a side on which the glass sheet lies, a portion covered with the printed silver layer; an inner glass sheet adjacent to the interior of the vehicle and bent using the press-bending device; and an intermediate film for joining the outer glass sheet and the inner glass sheet, the film being interposed between the outer glass sheet and the inner glass sheet.

The black ceramic layer preferably has Bi oxide.

According to a further aspect of the present invention, there is provided a method for manufacturing a vehicle glass, comprising the steps of printing a black ceramic layer on a glass sheet, covering the black ceramic layer with a printed silver layer, firing the glass covered with the black ceramic layer and the printed silver layer at a designated temperature in order to ionize and diffuse the silver in the glass sheet, and bending the fired glass sheet using a press-bending device; wherein, in the firing step, an integral of temperature and time is calculated from the heating time of a high-temperature region that starts at a point in time at which a designated glass temperature is reached and ends at a point in time at which heating is completed, and the heating temperature of a high-temperature region that starts at the designated glass temperature and ends at a temperature at which heating is completed, and the heating time is set so that the integral does not fall below a given value.

The designated glass temperature is preferably 580°C, and the given value is preferably 2500°C/sec.

The designated glass temperature is preferably 580°C, and the given value is preferably 3500°C/sec.

Advantageous Effects of Invention:

According to the vehicle glass of the present invention, the chromatic coordinate b* in the CIE 1976 color system defined in JIS Z 8729 does not exceed 6 when a reflection color tone is obtained by measuring, from a side on which the glass sheet lies, a portion covered with the printed silver layer. The color problem is resolved when the chromatic coordinate b* is 6 or less. The color problem is more thoroughly resolved when the chromatic coordinate b* is 3 or less.

According to the method for manufacturing the vehicle glass of the present invention, the heating time is set so that the integral of temperature and time does not fall below a given value, and the vehicle glass is manufactured during this heating time. The silver colloid diffusion layer in the resulting vehicle glass has an allowable color.

In the present invention, the heating temperature and the heating time must be controlled, but this control is much easier than the conventional adjustment of silver colloid particles. As a result, the vehicle glass can be manufactured easily, with a greater output, and at a lower cost.

BRIEF DESCRIPTION OF DRAWINGS

Fig. 1 is a view showing a main part of a vehicle glass according to the present invention;
Fig. 2 is a cross-sectional view taken along line 2-2 of Fig. 1;
Fig. 3 is a cross-sectional view showing a glass sheet covered with a black ceramic layer and a printed silver layer;
Fig. 4 is a view illustrating the basic configuration of a heating furnace and a press-bending device;
Fig. 5 is a view illustrating an operation of the press-bending device;
Fig. 6 illustrates graphically the conditions of Experiments 1 and 2;
Fig. 7 illustrates graphically the conditions of Experiments 3 to 5;
Fig. 8 illustrates graphically the conditions of Experiments 6 to 8;
Fig. 9 is a graph illustrating the results of the experiments in terms of the correlation between the integral and b*;
Fig. 10 is a view illustrating the basic configuration of laminated glass; and
Fig. 11 is a view illustrating the basic configuration of conventional vehicle glass.

DESCRIPTION OF EMBODIMENTS

Certain preferred embodiments of the present invention will be described below with reference to the accompanying drawings.

An example of the present invention will be described now with reference to the drawings.

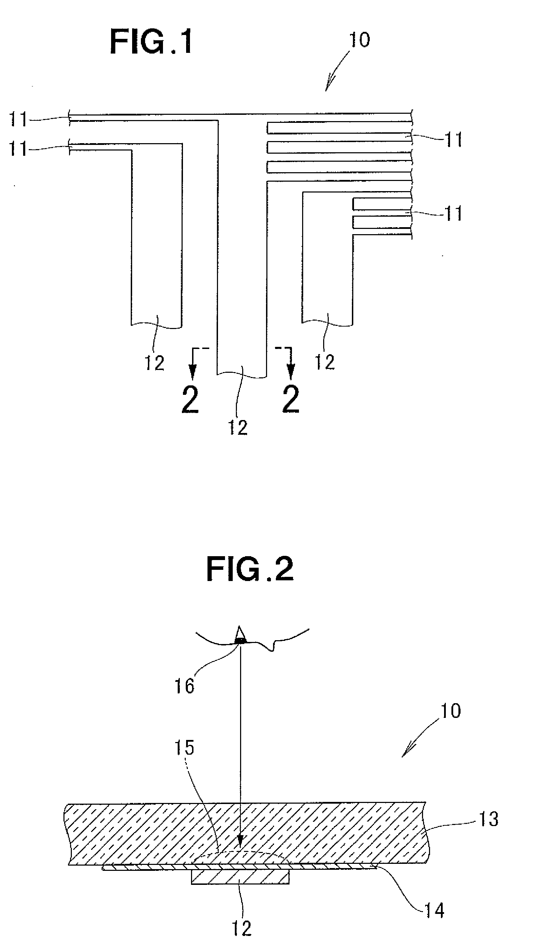

A thin deicer strip 11 and a deicer busbar part 12 for feeding electric power to a plurality of deicer strips 11 are printed on a vehicle glass 10, as shown in Fig. 1. A deicer (de-icer) is defined as a de-icing device for melting ice.

The deicer busbar part 12 is a printed silver layer. This part is labeled below as the printed silver layer 12. The printed silver layer 12 is coated onto a black ceramic layer 14 printed on a glass sheet 13, as shown in Fig. 2. Silver ions are diffused from the printed silver layer 12 to the glass sheet 13, and a silver colloid diffusion layer 15 is formed on the glass sheet 13.

A method for manufacturing such vehicle glass 10 will be described below.

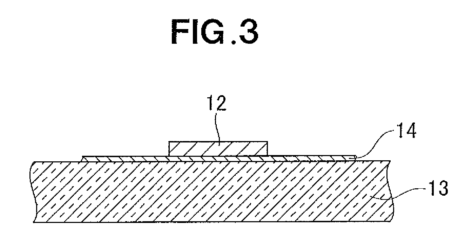

The black ceramic layer 14 is printed on the glass sheet 13, as shown in Fig. 3. The black ceramic layer 14 is then covered with the printed silver layer 12.

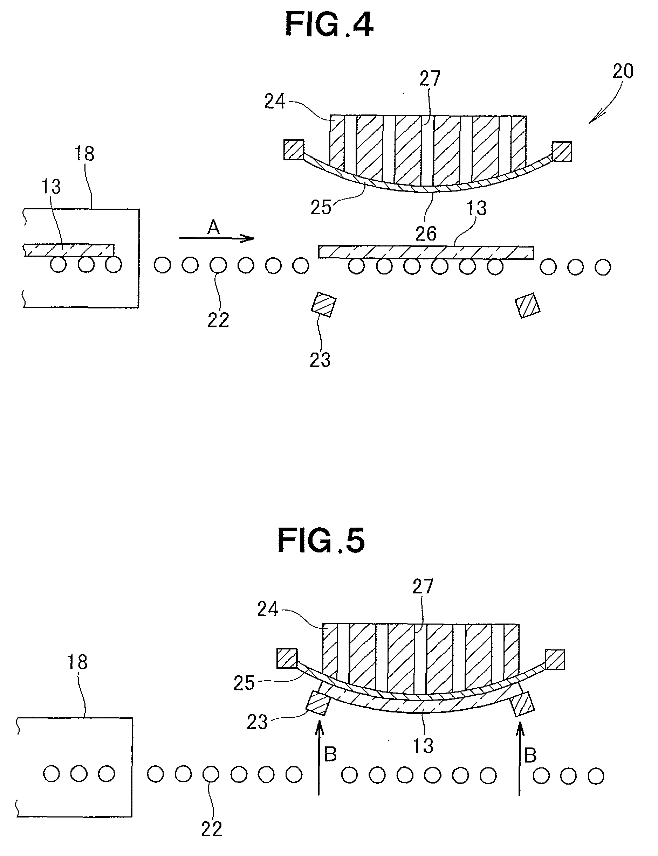

The glass sheet 13 covered with the printed silver layer 12 is heated to a designated temperature in a furnace 18 shown in Fig. 4. As a result, the silver colloid diffusion layer 15 shown in Fig. 2 is formed on the glass sheet 13.

A press-bending device 20 is disposed at the exit of the furnace 18.

The press-bending device 20 is formed of transport rollers 22 for transporting the glass sheet 13 heated to a designated temperature in the direction of arrow A, a hoistable support frame 23 disposed below the transport rollers 22, a press die 24 disposed above the support frame 23 and above the transport rollers 22, and a cover member 26 disposed along the curved lower surface of the press die 24, as shown in Fig. 4.

The support frame 23 is raised in the direction of arrow B, whereby the glass sheet 13 is raised, as shown in Fig. 5. The glass sheet 13 is pressed against the curved surface of the press die 24 via the cover member 25. In parallel with this, the plate is held by vacuum suction using vertical through-holes 27 in the press die 24. The glass sheet 13 having a curvature that corresponds to the curved surface of the press die 24 is obtained by this suction action and the pressing action of the support frame 23. The glass sheet 13 becomes the vehicle glass 10 shown in Fig. 1.

The above-described press-bending is achieved in less than one minute.

Bent glass can also be obtained by gravity-bending, which is a different method. Gravity-bending is performed by placing the glass sheet on a frame. The areas of the glass sheet unsupported by the frame are caused to sag downward under gravity by heating the glass sheet to 580˚C or greater. The sagging proceeds gradually. An essential condition of gravity-bending is that the glass sheet be kept at 580˚C or greater for one minute or longer.

In terms of productivity, press-bending is superior to gravity-bending. The use of press-bending is therefore assumed in the present invention.

The black ceramic layer 14 is black in Fig. 2. No color problems arise because the color difference is small as long as the silver colloid diffusion layer 15 is a dark color.

However, the color difference between the silver colloid diffusion layer 15 and the black ceramic layer 14 is noticeable when the former is a bright or painted color. The presence of the silver colloid diffusion layer 15 can therefore be recognized by an eye 16, causing problems in terms of appearance.

The present inventors thus performed the following experiments in order to solve the color problem.

(Experimental examples)

Experimental examples according to the present invention will be described below, but the present invention is not limited to these experimental examples.

○ Sample material: A black ceramic paste was printed on a float glass sheet, the printed paste was dried and covered with a printed silver layer, and the dried sample material was used for the experiments.
○ Experiment conditions: The sample material was fired based on the heating curve described below.
○ Measurement item: The chromatic coordinate b* in the CIE 1976 color system defined in JIS Z 8729 was measured using a differential colorimeter. Specifically, a portion covered with the printed silver layer 12 was viewed from the direction of the glass sheet 13 (eye 16), whereby the chromatic coordinate b* was measured, as shown in Fig. 2.
○ Evaluation: The b* value is an indicator showing chromaticity in the yellow direction. 0 is close to black, and the color becomes a brighter yellow as the numerical value increases. When b* is 6 or less, the color is close to a black background and stands out to a lesser extent. When b* is 3 or less, the color stands out even less. Accordingly, when b* exceeds 6, the evaluation is "poor"; when b* is 3 or less, the evaluation is "satisfactory"; and when b* is between 3 and 6 ($3 < b^* \leq 6$), the evaluation is "good."

The experiment conditions will be described in detail.

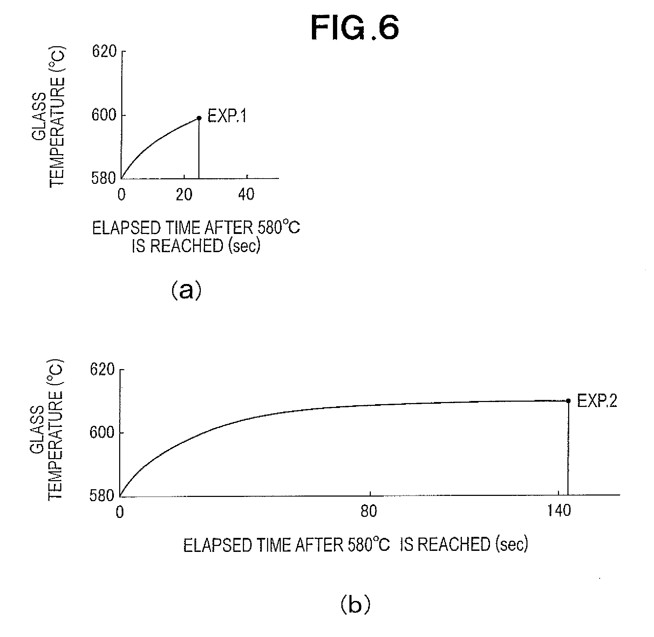

Experiment 1 was performed according to the heating curve shown in Fig. 6(a). Heating ends at the position of the black dot attached to the distal end of the rightward-ascending curve.

Experiment 2 was performed according to the heating curve shown in Fig. 6(b).

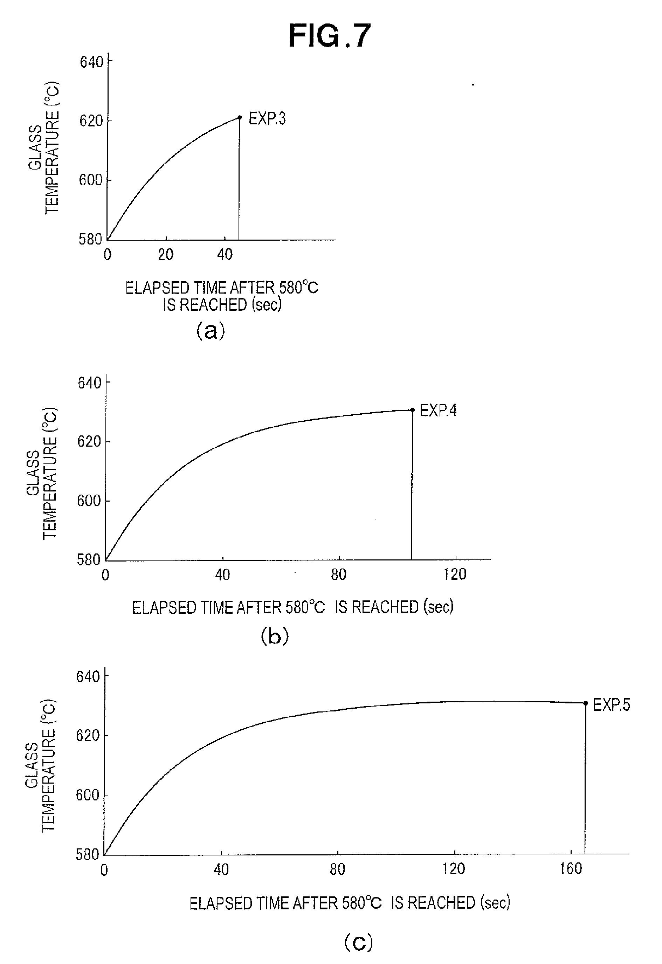

Experiment 3 was performed according to the heating curve shown in Fig. 7(a), Experiment 4 was performed according to the heating curve shown in Fig. 7(b), and Experiment 5 was performed according to the heating curve shown in Fig. 7(c).

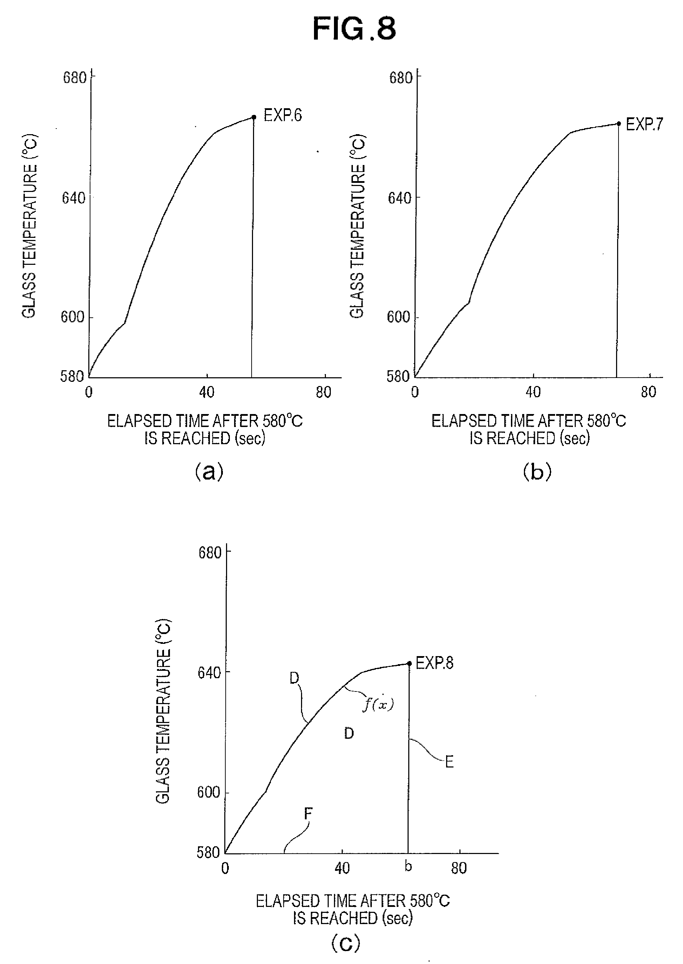

Experiment 6 was performed according to the heating curve shown in Fig. 8(a), Experiment 7 was performed according to the heating curve shown in Fig. 8(b), and Experiment 8 was performed according to the heating curve shown in Fig. 8(c).

Each of the sample materials (eight samples) were fired according to the heating curves shown in Figs. 6, 7, and 8, and b* was measured. The results are shown in the following table.

Table 1

| |
|---|
| satisfactory : $b^* \leq 3$<br>good : $3 < b^* \leq 6$ |

(continued)

| poor : b*>6 | | | |
|---|---|---|---|
| Experiment No. | Heating curve | b* | Evaluation |
| Experiment 1 | Fig. 6(a) | Irregular color | poor |
| Experiment 2 | Fig. 6(b) | 2 | satisfactory |
| Experiment 3 | Fig. 7(a) | 9 | poor |
| Experiment 4 | Fig. 7(b) | 2.5 | satisfactory |
| Experiment 5 | Fig. 7(c) | 1.5 | satisfactory |
| Experiment 6 | Fig. 8(a) | 3.5 | good |
| Experiment 7 | Fig. 8(b) | 2.5 | satisfactory |
| Experiment 8 | Fig. 8(c) | 5.5 | good |

Based on Fig. 6(a), an irregular color was conspicuous and b* was immeasurable in Experiment 1, which involved firing the samples. The evaluation was therefore "poor."

Based on Fig. 6(b), b* was 2 in Experiment 2, which involved firing the samples. The evaluation was therefore "satisfactory."

According to an analysis of Fig. 6, the heating time (time that elapses after 580˚C is reached) in (b) was longer than the heating time (time that elapses after 580˚C is reached) in (a). The evaluation of (b) was better than the evaluation of (a). As a result, it was recognized that the evaluation improves with an increase in the time that elapses after 580˚C is reached.

As shown in Table 1, b* was 9 in Experiment 3, b* was 2.5 in Experiment 4, and b* was 1.5 in Experiment 5.

According to an analysis of Fig. 7, the time that elapses after 580˚C is reached was longer in (b) according to Experiment 4 than in (a) according to Experiment 3. The time that elapses after 580˚C is reached was longer in (c) according to Experiment 5 than in (b). It was understood that the evaluation improves with an increase in the time that elapses after 580˚C is reached.

As shown in Table 1, b* was 3.5 in Experiment 6, which was performed based on Fig. 8(a), and b* was 2.5 in Experiment 7, which was performed based on Fig. 8(b). The b* value was 5.5 in Experiment 8, which was performed based on Fig. 8(c).

According to an analysis of Fig. 8, there was substantially no difference among Figs. 8(a), 8(b), and 8(c) in the time that elapses after 580˚C is reached. However, the glass temperature (maximum value) in Figs. 8(a) and 8(b) was slightly above 660˚C, while the glass temperature (maximum value) in Fig. 8(c) remained slightly above 640˚C. Experiment 6 was "good," Experiment 7 was "satisfactory," and Experiment 8 was also "good." It was therefore understood that the level of the heating temperatures has an effect on the evaluation in cases in which the time elapsed after 580˚C is reached is the same.

The evaluation improves with an increase in the time that elapses after 580˚C is reached, and the evaluation improves with higher heating temperatures. It is therefore expected that the evaluation will improve with an increase in the product of the heating temperature and the time that elapses after 580˚C is reached.

Describing Fig. 8(c) as an example, the product of the heating temperature and the time that elapses after 580˚C is reached can be expressed as the surface area of a region bounded by curve D, vertical line E, and horizontal axis (x-axis) F.

The surface area can also be calculated using a mathematical formula in which f(x) is curve D, a is the value on the x-axis at a glass temperature of 580˚C, and b is the value on the x-axis at the point in time when heating ends (vertical line E). In this example, a = 0.

Mathematical Formula 1

$$\text{Integral} = \int_{a}^{b} f(x)\,dx$$

Such an integral can be easily obtained using a calculator.

Accordingly, an integral can be calculated using a calculator for the eight temperature curves shown in Figs. 6 to 8. The calculation results are shown in the following table.

Table 2

| Experiment No. | Integral at or above 580˚C | b* | Evaluation |
|---|---|---|---|
| Experiment 1 | 301 (˚C/sec) | Irregular color | poor |
| Experiment 2 | 3502 (˚C/sec) | 2 | satisfactory |
| Experiment 3 | 1214 (˚C/sec) | 9 | poor |
| Experiment 4 | 4013 (˚C/sec) | 2.5 | satisfactory |
| Experiment 5 | 6994 (˚C/sec) | 1.5 | satisfactory |
| Experiment 6 | 2944 (˚C/sec) | 3.5 | good |
| Experiment 7 | 3659 (˚C/sec) | 2.5 | satisfactory |
| Experiment 8 | 2572 (˚C/sec) | 5.5 | good |

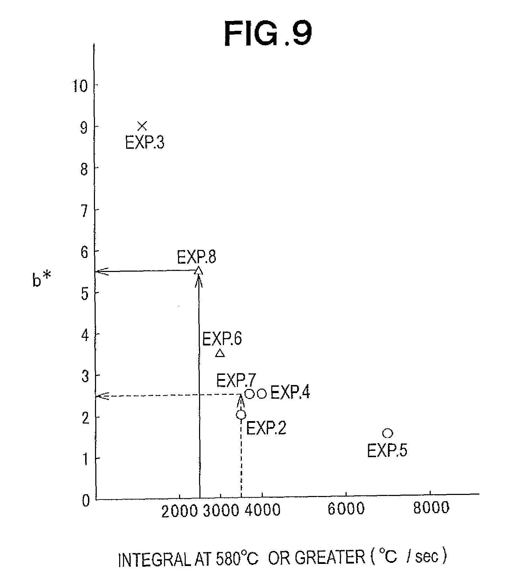

The correlation between the integral and b* shown in Table 2 is shown in Fig. 9. It can be confirmed that the evaluation improves as the integral increases and b* decreases.

The color problem arises when b* exceeds 6. Accordingly, b* must be 6 or less.

In the graph, b* is about 5.5, and the condition of 6 or less is met when the integral at 580˚C or greater is 2500˚C/sec, as shown by the solid line with arrows.

The present invention can be summarized as follows based on this information.

An integral of temperature and time is calculated from the heating time of a high-temperature region that starts at a point in time at which a designated glass temperature is reached and ends at a point in time at which heating is completed, and the heating temperature of a high-temperature region that starts at a designated glass temperature and ends at a temperature at which heating is completed. In cases in which the heating time is set so that the integral does not fall below a given value, the designated glass temperature is 580˚C, and the color problem is resolved by setting the given value to 2500˚C/sec. The heating time can be easily computed by applying 2500˚C/sec to the temperature curve. The manufacturing method can therefore be smoothly implemented.

In order to increase reliability and safety, b* must be 3 or less.

In the graph, b* is about 2.5, and the condition of 3 or less is met when the integral at 580˚C or greater is 3500˚C/sec, as shown by the dotted line with arrows.

The present invention can be summarized as follows based on this information.

An integral of temperature and time is calculated from the heating time of a high-temperature region that starts at a point in time at which a designated glass temperature is reached and ends at a point in time at which heating is completed, and the heating temperature of a high-temperature region that starts at a designated glass temperature and ends at a temperature at which heating is completed. In cases in which the heating time is set so that the integral does not fall below a given value, the designated glass temperature is 580˚C, and the color problem is more thoroughly resolved by setting the given value to 3500˚C/sec. The heating time can be easily computed by applying 3500˚C/sec to the temperature curve. The manufacturing method can therefore be smoothly implemented.

The designated glass temperature can be selected at will from a range of 560 to 590˚C. The integral decreases in cases in which a high temperature was set, and the integral increases in cases in which a low temperature was set. Accordingly, the given value is set in correspondence with the designated glass temperature.

The black ceramic layer will be examined next. The present inventors thought that there might be a correlation between the components of the black ceramic layer and the firing temperature. It was decided to examine the components shown in the following table in order to validate this opinion.

Table 3

| Experiment No. | Solid content (100) | | | | b* |
|---|---|---|---|---|---|
| | SiO$_2$ | ZnO | Bi$_2$O$_3$ | Other | |
| | (wt%) | | | | |
| Experiment 6 | 36.5 | 25.5 | - | 38.0 | 3.5 |

(continued)

| (wt%) | | | | | |
|---|---|---|---|---|---|
| Experiment No. | Solid content (100) | | | | b* |
| | $SiO_2$ | ZnO | $Bi_2O_3$ | Other | |
| Experiment 9 | 32.2 | 18.6 | 4.3 | 44.9 | 2.0 |

In the black ceramic used in Experiment 6, 100 wt% solid content was kneaded into oil, as shown under "Experiment 6" in Table 3. The solid content was made of 36.5 wt% $SiO_2$, 25.5 wt% ZnO, and 38.0 wt% other content.

The b* value of a vehicle glass obtained under these conditions was 3.5, as described above.

In the new Experiment 9, 100 wt% solid content was kneaded into oil for the black ceramic, as shown under "Experiment 9" in Table 3. The solid content was made of 32.2 wt% $SiO_2$, 18.6 wt% ZnO, 4.3 wt% $Bi_2O_3$, and 44.9 wt% other content.

The b* value of a vehicle glass obtained under these conditions was 2.0. Specifically, b* becomes 3 or less when $Bi_2O_3$ is mixed into the solid content.

Bi oxide is assumed to have the following action.

Low-temperature firing became possible and the apparent heating time could be extended when Bi oxide was included in the black ceramic layer. The integral of temperature and time was increased and b* was reduced when the heating time was extended. As a result, b* was 3 or less. The color problem can be resolved more thoroughly as long as b* is 3 or less.

The above-described vehicle glass may be a laminated glass, as well as a single-plate bent glass. The laminated glass form will be described in the following.

The vehicle glass 10 is formed of an outer glass sheet 31 adjacent to the exterior of the vehicle, an inner glass sheet 32 adjacent to the interior of the vehicle, and an intermediate film 33 for joining these glass sheets 31, 32, as shown in Fig. 10.

The outer glass sheet 31 is a bent glass sheet formed by printing a black ceramic layer 14 on a face of a glass sheet 13 adjacent to the interior of the vehicle, covering the black ceramic layer 14 with a printed silver layer 12, and bending using a press-bending device. When a reflection color tone is obtained by measuring, from a side on which the glass sheet lies, a portion covered with the printed silver layer 12, the chromatic coordinate b* in the CIE 1976 color system defined in JIS Z 8729 does not exceed 6.

The inner glass sheet 32 is a bent glass obtained by bending using a press-bending device.

The intermediate film 33 is an adhesive film interposed between the outer glass sheet 31 and the inner glass sheet 32.

A tempered glass, as well as the laminated glass, may also be used as a vehicle glass. The tempered glass is a strained glass sheet obtained by heating a glass sheet at a high temperature and forcibly cooling the glass using air or the like.

The tempered glass is strained, and hence distorts images seen through the glass.

In this regard, the laminated glass can be treated at lower temperatures than the tempered glass, and has less strain. The laminated glass is appropriate for use as a vehicle windshield because images seen through the glass are less distorted.

The glass sheet 13 may be any type as long as the glass is commercially available as plate glass. The black ceramic layer and the printed silver layer may have any differences in the fine components as long as the layers can be supplied for practical use. The heating furnace may be of any form or type as long as the furnace can be supplied for practical use.

INDUSTRIAL APPLICABILITY

The present invention is applied to a vehicle glass formed by printing a black ceramic layer on a glass sheet, and covering that layer with a printed silver layer. Legend:

10    Vehicle glass
12    Printed silver layer
13    Glass sheet
14    Black ceramic layer
15    Silver colloid diffusion layer
20    Press-bending device

31    Outer glass sheet
32    Inner glass sheet
33    Intermediate film

## Claims

1. A vehicle glass obtained by printing a black ceramic layer on a glass sheet, covering the black ceramic layer with a printed silver layer, and bending the resulted glass sheet by use of a press-bending device,
   wherein the chromatic coordinate b* in the CIE 1976 color system defined in JIS Z 8729 does not exceed 6 when a reflection color tone is obtained by measuring, from a side on which the glass sheet lies, a portion covered with the printed silver layer.

2. A vehicle glass obtained by printing a black ceramic layer on a glass sheet, covering the black ceramic layer with a printed silver layer, and bending the resulted glass sheet by use of a press-bending device,
   wherein the chromatic coordinate b* in the CIE 1976 color system defined in JIS Z 8729 does not exceed 3 when a reflection color tone is obtained by measuring, from a side on which the glass sheet lies, a portion covered with the printed silver layer.

3. A vehicle glass comprising:

   an outer glass sheet adjacent to an exterior of the vehicle, formed by printing a black ceramic layer on a face of a glass sheet adjacent to an interior of the vehicle, covering the black ceramic layer with a printed silver layer, and bending the resulted glass sheet by using a press-bending device, wherein the chromatic coordinate b* in the CIE 1976 color system defined in JIS Z 8729 does not exceed 6 when a reflection color tone is obtained by measuring, from a side on which the glass sheet lies, a portion covered with the printed silver layer;
   an inner glass sheet adjacent to the interior of the vehicle and bent the inner glass sheet by using the press-bending device; and
   an intermediate film for joining the outer glass sheet and the inner glass sheet, the film being interposed between the outer glass sheet and the inner glass sheet.

4. The vehicle glass of claim 1, wherein the black ceramic layer includes Bi oxide.

5. A method for manufacturing a vehicle glass, comprising the steps of printing a black ceramic layer on a glass sheet, covering the black ceramic layer with a printed silver layer, firing the glass covered with the black ceramic layer and the printed silver layer at a designated temperature in order to ionize and diffuse the silver in the glass sheet, and bending the fired glass sheet using a press-bending device,
   wherein, in the firing step, an integral of temperature and time is calculated from the heating time of a high-temperature region that starts at a point in time at which a designated glass temperature is reached and ends at a point in time at which heating is completed, and the heating temperature of a high-temperature region that starts at the designated glass temperature and ends at a temperature at which heating is completed, and the heating time is set so that the integral does not fall below a given value.

6. The method for manufacturing a vehicle glass of claim 5, wherein the designated glass temperature is 580 ˚C, and the given value is 2500˚ C/sec.

7. The method for manufacturing a vehicle glass of claim 5, wherein the designated glass temperature is 580 ˚C, and the given value is 3500 ˚C/sec.

# FIG.1

10

11

11

11

11

12

2   2

12

12

# FIG.2

16

15

10

13

14

12

# FIG.3

# FIG.4

# FIG.5

# FIG.6

ELAPSED TIME AFTER 580°C
IS REACHED (sec)

(a)

ELAPSED TIME AFTER 580°C  IS REACHED (sec)

(b)

# FIG.7

(a)

(b)

(c)

# FIG.8

(a)

(b)

(c)

FIG.9

# FIG.10

# FIG.11

### INTERNATIONAL SEARCH REPORT

| | International application No. |
|---|---|
| | PCT/JP2010/057756 |

A. CLASSIFICATION OF SUBJECT MATTER
*C03C17/36*(2006.01)i, *C03C27/12*(2006.01)i, *B60J1/00*(2006.01)n

According to International Patent Classification (IPC) or to both national classification and IPC

B. FIELDS SEARCHED

Minimum documentation searched (classification system followed by classification symbols)
C03C15/00-23/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2001-199746 A (Asahi Glass Co., Ltd.),<br>24 July 2001 (24.07.2001),<br>claims 1, 2; paragraphs [0001], [0004], [0013]<br>to [0015], [0029], [0033]; tables 1 to 3<br>(Family: none) | 1-3<br>4-7 |
| A | JP 2001-106553 A (Asahi Glass Co., Ltd.),<br>17 April 2001 (17.04.2001),<br>paragraphs [0006], [0015]<br>(Family: none) | 4 |
| A | JP 2008-142614 A (Toppan TDK Label Co., Ltd.),<br>26 June 2008 (26.06.2008),<br>paragraphs [0001], [0004], [0006]<br>(Family: none) | 4 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 May, 2010 (19.05.10) | 01 June, 2010 (01.06.10) |

| Name and mailing address of the ISA/<br>Japanese Patent Office | Authorized officer |
|---|---|
| Facsimile No. | Telephone No. |

Form PCT/ISA/210 (second sheet) (July 2009)

17

<div align="center">**INTERNATIONAL SEARCH REPORT**</div>

| International application No. |
| --- |
| PCT/JP2010/057756 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

The invention in claim 1 does not have a novelty and a special technical feature, since the invention is described in the following document 1. Consequently, the invention in claim 1 does not satisfy the requirement of unity.

The inventions in claims as indicated below are relevant to main invention.

Claims 1, 2

Document 1: JP 2001-199746 A (Asahi Glass Co., Ltd.), 24 July 2001 (24.07.2001), claims 1, 2, [0001], [0004], [0013] - [0015], [0029], [0033], tables 1 - 3, (Family: none)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001199746 A